Europäisches Patentamt

European Patent Office

Office européen des brevets

(19)

(11) Veröffentlichungsnummer: **0 302 277 B1**

# (12) EUROPÄISCHE PATENTSCHRIFT

(45) Veröffentlichungstag der Patentschrift: **16.09.92**

(21) Anmeldenummer: **88111311.2**

(22) Anmeldetag: **14.07.88**

(51) Int. Cl.⁵: **F02M 31/20**

---

(54) **Vorrichtung zum Kühlen von Kraftstoff eines Kraftfahrzeugs.**

---

(30) Priorität: **03.08.87 DE 3725664**

(43) Veröffentlichungstag der Anmeldung:
**08.02.89 Patentblatt 89/06**

(45) Bekanntmachung des Hinweises auf die
Patenterteilung:
**16.09.92 Patentblatt 92/38**

(84) Benannte Vertragsstaaten:
**DE ES FR GB IT SE**

(56) Entgegenhaltungen:
**DE-A- 3 330 250**
**DE-A- 3 515 830**
**DE-A- 3 607 854**

**PATENT ABSTRACTS OF JAPAN, Band 10,**
**Nr. 281 (M-520)[2337], 25. September 1986; &**
**JP - A - 61 102 315**

(73) Patentinhaber: **Behr GmbH & Co.**
**Mauserstrasse 3**
**W-7000 Stuttgart 30(DE)**

(72) Erfinder: **Knoblauch, Rainer, Dipl.-Ing.**
**Grefstrasse 36**
**W-7000 Stuttgart 31(DE)**

(74) Vertreter: **Dauster, Hanjörg, Dipl.-Ing. et al**
**WILHELM & DAUSTER Patentanwälte Hospi-**
**talstrasse 8**
**W-7000 Stuttgart 1(DE)**

EP 0 302 277 B1

## Beschreibung

Die Erfindung betrifft eine Vorrichtung zum Kühlen von Kraftstoff in einem Kraftfahrzeug, das mit einer Klimaanlage ausgerüstet ist, die einen Kältemittelkreislauf mit einem Verdampfer, einem Kompressor, einem Kondensator und einem Expansionsventil enthält, in welchem Kältemittelkreislauf ein Kraftstoffkühler in Reihe mit dem Verdampfer angeordnet ist.

Bei bekannten Vorrichtungen der eingangs genannten Art (DE-A 33 30 250, DE-A 35 15 830), ist jeweils der Kraftstoffkühler zwischen dem Verdampfer und dem Kompressor angeordnet. Damit ergibt sich nur eine relativ geringe Abkühlung des Kraftstoffes im Verhältnis zu dem Bauvolumen des Kraftstoffkühlers. Daneben wird jedoch eine starke Aufheizung des Kältemittels verbunden mit einem hohen saugseitigen Druckverlust erhalten. Dies führt zu einer verminderten Kälteleistung und zu einer erhöhten thermischen Beanspruchung des Kompressors.

Es ist auch eine Vorrichtung bekannt (JP-A 61-102 315), bei der ein Kraftstoffkühler parallel zum Verdampfer angeordnet ist. Dieser Kraftstoffkühler ist stromaufwärts von dem Expansionsventil an den Kältemittelkreislauf angeschlossen. Der Ausgang des Kraftstoffkühlers ist zwischen Verdampfer und Kompressor an den Kältemittelkreislauf angeschlossen. Für die Abzweigung zu dem Kraftstoffkühler ist ein Expansionsventil versehen. Aufgrund der getrennten Strömungswege und der zusätzlichen Elemente ergibt sich eine relativ aufwendige Bauweise mit einem relativ hohen Raumbedarf.

Der Erfindung liegt die Aufgabe zugrunde, die Funktionsweise einer Vorrichtung der eingangs genannten Art zu verbessern.

Diese Aufgabe wird dadurch gelöst, daß der Kraftstoffkühler in Strömungsrichtung vor dem Verdampfer und nach dem Expansionsventil angeordnet ist.

Bei dieser Ausbildung kann der Kraftstoffkühler als eine erste Stufe der Verdampfung angesehen werden. Es wird möglich, sowohl für den Kraftstoffkühler als auch für den Verdampfer eindeutige Verhältnisse zu schaffen, so daß eine gute Abkühlung des Kraftstoffes erhalten wird, ohne daß das Bauvolumen des dafür benötigten Wärmetauschers zu groß wird. Darüber hinaus wird das Kältemittel nicht so stark wie beim Stand der Technik aufgeheizt. Ebenso ist der saugseitige Druckverlust eingeschränkt.

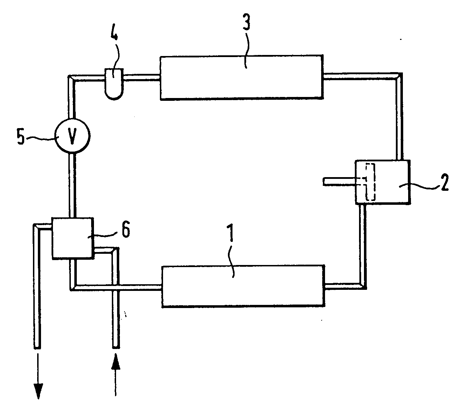

Weitere Merkmale und Vorteile der Erfindung ergeben sich aus der nachfolgenden Beschreibung des in der Zeichnung dargestellten Ausführungsbeispiel.

Die Zeichnung zeigt schematisch eine Klimaanlage eines Kraftfahrzeuges, d.h. den Kältemittelkreislauf einer derartigen Klimaanlage. Dieser Kältemittelkreislauf enthält einen Verdampfer 1, dem in Strömungsrichtung des Kältemittels ein Kompressor 2 nachfolgt, der das Kältemittel zu einem Kondensator 3 fördert. An den Kondensator 3 schließt ein Ölabscheider 4 an, dem ein Expansionsventil 5 nachfolgt. Das Expansionsventil 5 entspannt das Kältemittel wieder, das dem Verdampfer 1 zugeführt wird und dort Verdampfungswärme aufnimmt.

In dem Kältemittelkreislauf zwischen dem Expansionsventil 5 und dem Verdampfer 1 ist ein Kraftstoffkühler 6 angeordnet, der von dem entspannten Kältemittel durchströmt wird. Der als Flüssigkeit-Flüssigkeit-Wärmetauscher ausgebildete Kraftstoffkühler 6 wird gegenläufig zu dem Kältemittel von Kraftstoff durchströmt.

## Patentansprüche

1. Vorrichtung zum Kühlen von Kraftstoff in einem Kraftfahrzeug, das mit einer Klimaanlage ausgerüstet ist, die einen Kältemittelkreislauf mit einem Verdampfer (1), einem Kompressor (2), einem Kondensator (3) und einem Expansionsventil (5) enthält, in welchem Kältemittelkreislauf ein Kraftstoffkühler (6) in Reihe mit dem Verdampfer (1) angeordnet ist, dadurch gekennzeichnet, daß der Kraftstoffkühler (6) in Strömungsrichtung vor dem Verdampfer (1) und nach dem Expansionsventil (5) angeordnet ist.

2. Vorrichtung nach Anspruch 1, dadurch gekennzeichnet, daß der Kraftstoffkühler (6) gegenläufig zu der Strömungsrichtung des Kältemittels von Kraftstoff durchströmt wird.

## Claims

1. Device for the cooling of fuel in a motor vehicle equipped with an air conditioning system comprising a refrigerant circuit with evaporator (1), a compressor (2), a condenser (3) and an expansion valve (5), with a fuel cooler (6) arranged in series with the evaporator (1) in the refrigerant circuit,
wherein the fuel cooler (6) is arranged upstream of, and the evaporator (1) is arranged downstream of the expansion valve (5).

2. Device according to claim 1, wherein the fuel flows through the fuel cooler (6) in a direction opposite to the flow direction of the refrigerant.

## Revendications

1. Dispositif pour le refroidissement de carburant de véhicule automobile, équipé d'une installation de climatisation, comprenant un circuit de fluide frigorigène avec un évaporateur (1), un compresseur (2), un condensateur (3) et une soupape de détente (5), un refroidisseur de carburant (6) étant disposé dans le circuit en série avec l'évaporateur (1), caractérisé en ce que le refroidisseur de carburant (6) est logé en direction du flux devant l'évaporateur (1) et après la soupape de détente (5).

2. Dispositif selon la revendication 1, caractérisé en ce que le refroidisseur de carburant (6) est traversé de carburant en sens contraire de la direction de flux du fluide frigorigène.